# EUROPEAN PATENT SPECIFICATION

(11) **EP 1 580 167 B1**
(45) Date of publication and mention of the grant of the patent: **02.05.2007**
(21) Application number: 05005578.9
(22) Date of filing: 15.03.2005
(51) Int. Cl.: C02F 1/40

(54) **Drain water treatment system**
System zur Abwasserbehandlung
Systeme pour le traitement des eaux usées

(30) Priority: 26.03.2004 JP 2004092198
(43) Date of publication of application: 28.09.2005
(73) Proprietor: AISIN SEIKI KABUSHIKI KAISHA, Kariya-shi, Aichi-ken 448-8650 (JP)
(72) Inventor: Nakane, Shinichi IPD AISIN SEIKI KABUSHIKI KAISHA, Kariya-shi Aichi-ken, 448-8650 (JP); Hayashi, Masashi IPD AISIN SEIKI KABUSHIKI KAISHA, Kariya-shi Aichi-ken, 448-8650 (JP)
(74) Representative: TBK-Patent

(56) References cited:
- EP-A- 1 281 423
- WO-A-98/01395
- US-A1- 2003 127 379

## Description

### FIELD OF THE INVENTION

This invention generally relates to a drain water treatment system. More particularly, this invention pertains to a drain water treatment system for treating drain water that includes oil.

### BACKGROUND

It is known that exhaust gas generated in a gas engine system and the like produces drain water when the exhaust gas is condensed. This drain water is acidic because of the influence of components of the exhaust gas and can include a metal sludge generated in an engine body, or oil, as an unburned component. In order to discharge such drain water from an engine system, a drain water treatment system, such as is disclosed in Japanese Utility Model Publication No. H06-32164, can be used.

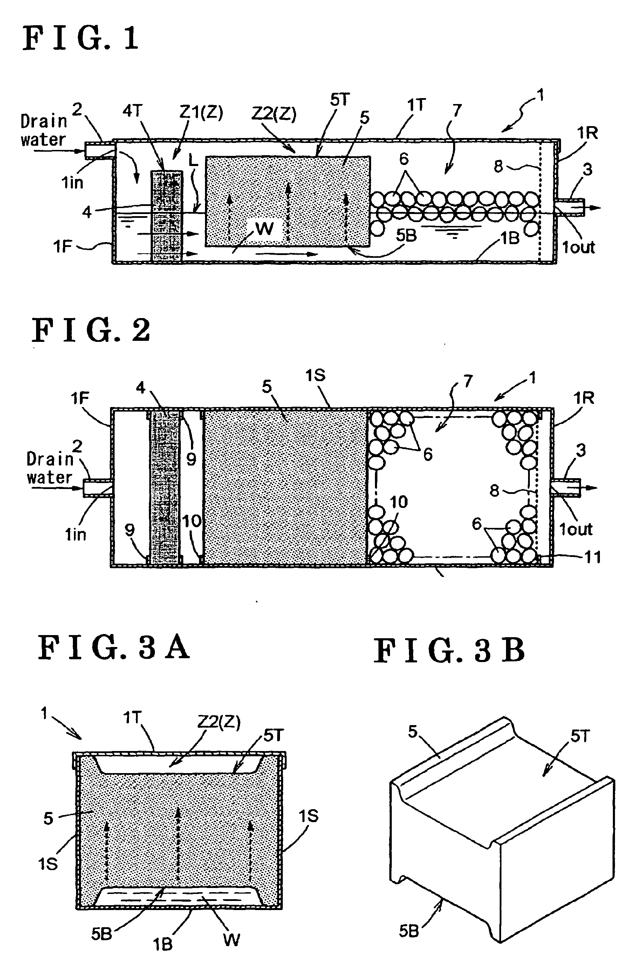

According to the drain water treatment system disclosed, a filter layer includes a filter for elimination of sludge and a filter for oil adsorption. As shown in Fig. 1 of the Japanese Utility Model Publication No. H06-32164, a void portion, the filter layer, and an anti-alkali layer are sequentially formed from a drain inflow side to a drain discharge side. The filter layer is formed from a lower bottom face to an upper bottom face of the system main body. In this structure, if the filter layer is blocked by sludge or the like, the drain water may not be discharged. In such circumstances, the drain water may flow back to the exhaust side of the engine, or drain may enter the engine. In either of these eventualities, a failure of the engine can ensue.

In addition, the filter for oil adsorption adsorbs only oil in the drain water. The effectiveness of adsorption tends to depend on the degree of the concentration of oil in the drain water. Therefore, if concentration of oil in the drain water is extremely low, the oil may not be adsorbed by the filter for oil adsorption, and occasions have occurred where oil in the drain water has been discharged from the drain water treatment system.

Thus, a need exists for a drain water treatment system with which the discharge of drain water from a drain water outlet can be achieved with a degree of certitude, and with which effectiveness in the elimination of oil from the drain water can be secured. The present invention has been made in view of the above circumstances and provides such a system.

### SUMMARY OF THE INVENTION

According to an aspect of the present invention, a drain water treatment system including a drain water inlet into which drain water including moisture as a solvent and oil as a solute flows, and a drain water outlet from which the drain water flows, characterized in that the drain water treatment system further includes an oil-water separation filter for separating moisture and oil in a state in which an upper end portion of the oil-water separation filter is positioned above a normal water surface of the drain water, an oil adsorption filter for adsorbing the oil, and an overflow void that is formed extending from the drain water inlet to the drain water outlet.

According to the aforementioned invention, by providing, within the drain water treatment system, the oil-water separation filter for separating moisture as a solvent and oil as a solute, oil contained in the drain water can be agglutinated to form oil droplets. Since the upper end portion of the oil-water separation filter protrudes above the normal surface of the drain water, the water-oil separation filter functions for the drain water flowing into the system with a degree of certitude. Therefore, even when oil in the drain water is of a low concentration, the oil is agglutinated by means of the oil-water separation filter and can be easily adsorbed onto the oil adsorption filter. Further, since the overflow void is formed between the drain water inlet and the drain water outlet, the flow of drain water is not disrupted even when the flow passage normally used for the drain water is clogged. Because drain water is discharged from the drain water outlet lout after duly passing through the overflow void, the drain water does not flow back, and no damage can be caused to the engine.

### BRIEF DESCRIPTION OF THE DRAWINGS

The foregoing and additional features and characteristics of the present invention will become more apparent from the following detailed description considered with reference to the accompanying drawings, wherein:

Fig. 1 is a longitudinal sectional view of a drain water treatment system according to a first embodiment of the present invention;

Fig. 2 is a cross sectional view of the drain water treatment system according to the first embodiment of the present invention;

Fig. 3A is a longitudinal sectional view of the drain water treatment system equipped with an oil adsorption filter;

Fig. 3B is a perspective view of the oil adsorption filter;

Fig. 4 is a longitudinal sectional view of the drain water treatment system according to a second embodiment of the present invention; and

Fig. 5 is a longitudinal sectional view of the drain water treatment system equipped with a blocking plate according to the second embodiment of the present invention.

### DETAILED DESCRIPTION

A first embodiment of the present invention is explained with reference to Figs. 1 and 2.

Figs. 1 and 2 respectively show a longitudinal sectional view and a cross sectional view of a drain water treatment system according to the present embodiment. A chassis type system main body 1, whose top face is covered by a removable cover 1T, includes a wall face 1F on a drain inflow side and a wall face 1R on a drain discharge side provided opposite the wall face 1F. A drain water inlet 1in is provided on the wall face 1F while a drain water outlet lout is provided on the wall face 1R. In addition, a drain inflow pipe 2 connected to an exhaust muffler (not shown) is provided on the drain water inlet 1in while a drain discharge pipe 3 is provided on the drain water outlet lout for discharging to the outside water that has passed through the drain water treatment system.

Within the system main body 1, an oil-water separation filter 4 having a predetermined thickness is formed between a pair of sidewalls 1 S at a predetermined distance from the wall face 1F in a downstream direction on the drain water inflow side. An oil adsorption filter 5 is formed at a predetermined distance on the downstream side of the oil-water separation filter 4. In addition, a neutralizing agent portion 7 filled to a predetermined height with a neutralizing agent 6, which brings the acidic drain water close to a neutral state, is formed in a portion extending from a downstream end side of the oil adsorption filter 5 to a mesh plate 8 provided in the vicinity of the wall face 1R. Further, positioning flanges 9 and 10 are respectively formed inwardly on the pair of sidewalls 1S so that the oil-water separation filter 4 and the oil adsorption filter 5 can be disposed in their respective positions. In the same way, the mesh plate 8 is fixed to a pair of flanges 11 respectively mounted on the insides of the pair of sidewalls 1S.

The oil-water separation filter 4, for which glass wool, or non-woven carbon fiber, is used as an internal material, has a feature of separating and extracting oil of a low concentration dispersed in the drain water. The oil that is extracted is agglutinated within the oil-water separation filter 4, thus forming oil droplets, and is then discharged through the drain water stream into the drain water on the downstream side. An upper end portion 4T of the oil-water separation filter 4 protrudes above a normal water surface L of the drain water in the drain water treatment system, a normal surface L (whose height is substantially the same as that of a lower end of the drain water outlet 1out). A void Z1 is formed between the cover 1T and the upper end portion 4T.

In addition to its capacity to adsorb the oil with which it is in contact, the oil adsorption filter 5, for which a non-woven material such as continuous polypropylene fiber is used as an internal material, has a water-shedding quality. Fig. 3A is a cross-sectional view of the drain water treatment system equipped with the oil adsorption filter 5. Fig. 3B is a perspective view of a single unit of the oil adsorption filter 5. As shown in Fig. 3A, a void defined between a bottom face 1B of the system main body 1 and a bottom face 5B of the oil adsorption filter 5 forms a water passage W into which the drain water flows. In addition, a void Z2 is defined between an upper face 5T of the oil adsorption filter 5 and the cover 1T.

Since the voids Z1 and Z2 are connected to each other, an overflow void Z is formed in the drain water treatment system extending from the drain water inlet 1 in to the drain water outlet 1out, as shown in Fig. 1. In a case where the oil-water separation filter 4 or the water passage W is clogged with sludge or foreign substances, and thus a flow passage that is normally utilized fails to function properly, a water surface of the drain water in the drain water treatment system is raised above the normal water surface L. In these circumstances, drain water flows into the void Z1 formed above the oil-water separation filter 4 and the void Z2 formed between the upper face 5T of the oil adsorption filter 5 and the cover 1T. Therefore, there is no danger of drain water that has once flowed into the drain water treatment system flowing back into the drain inflow pipe 2 through the drain water inlet lin.

Since the oil adsorption filter 5 has a water-shedding quality, oil can be accumulated in a portion of the oil adsorption filter 5 below the normal water surface L. Therefore, in comparison with cases where a hydrophilic or a lipophilic filter is used, the amount of oil adsorbed per unit volume is increased. The size of filter required for obtaining a predetermined oil adsorption capacity can accordingly be reduced. Accordingly, the drain water treatment system can be downsized by using an oil adsorption filter 5 having a water-shedding quality.

For purposes of preventing the neutralizing agent 6 from being discharged the neutralizing agent portion 7 is provided with the mesh plate 8 on a downstream side. The neutralizing agent 6 is thus prevented from flowing through the drain water stream to the drain water outlet 1out. Moisture in the drain water shows acidity because of the influence of exhaust gas. As the neutralizing agent 6 for neutralizing the moisture in the drain water, a granular member, containing a large amount of alkaline such as a broken stone or lime, is used.

When drain water including oil flows into the drain water treatment system from the drain water inlet 1in, the following procedure is performed. Oil is separated from the drain water and agglutinated, a process which leads to the formation of oil droplets. The oil droplets are discharged from the oil-water separation filter 4 through the drain water stream. At this time, oil within the droplets moves to the downstream side, floating in the drain water by virtue of a buoyancy force. Oil droplets that have moved to the downstream side from the oil-water separation filter 4 reach the neutralizing agent portion 7 through the water passage W formed below the oil adsorption filter 5.

Oil within the droplets exists on the upper layer portion of the drain water that flows into the water passage W. The oil droplets are pressed against the bottom face 5B of the oil adsorption filter 5 by virtue of a buoyancy force of the drain water and while maintaining contact with the bottom face 5B move to the downstream side. Accordingly, while the oil droplets flow into the water passage W they are pressed against the oil adsorption filter 5 in a positive manner by virtue of the buoyancy force of the drain water, and the degree of oil adsorption on the part of the oil adsorption filter 5 is thereby increased. Since oil is agglutinated so as to form droplets by means of the operation of the oil-water separation filter 4, even when the oil contained in the drain water flowing into the drain water treatment system has a low concentration, oil is adsorbed by the oil adsorption filter 5 on the downstream side with a degree of certitude.

When, after oil in the drain water in the water passage W has been eliminated by the oil adsorption filter 5, the drain water makes contact with the neutralizing agent 6 in the neutralizing agent portion 7 on the downstream side, a water-soluble acid material contained in the drain water and the neutralizing agent 6, which is an alkaline material, produce a neutralization reaction, and the drain water is thus neutralized. Drain water on which the aforementioned process has been performed is discharged from the drain water outlet lout outside the drain water treatment system.

The oil adsorption filter 5 can accumulate oil adsorbed within a predetermined capacity, but when the amount of oil adsorbed approaches the level of such a predetermined capacity, the adsorption ability of the oil adsorption filter 5 diminishes and the oil adsorption filter 5 needs to be replaced. On the other hand, because of the nature of its functionality the oil-water separation filter 4 does not need to be replaced. However, when a malfunction occurs because of metal sludge, foreign substances or the like contained in the drain water flowing into the drain water treatment system, the oil-water separation filter 4 does need to be replaced. Both of the filters 4 and 5 can be replaced by removing the cover 15 that constitutes an upper face of the system main body 1.

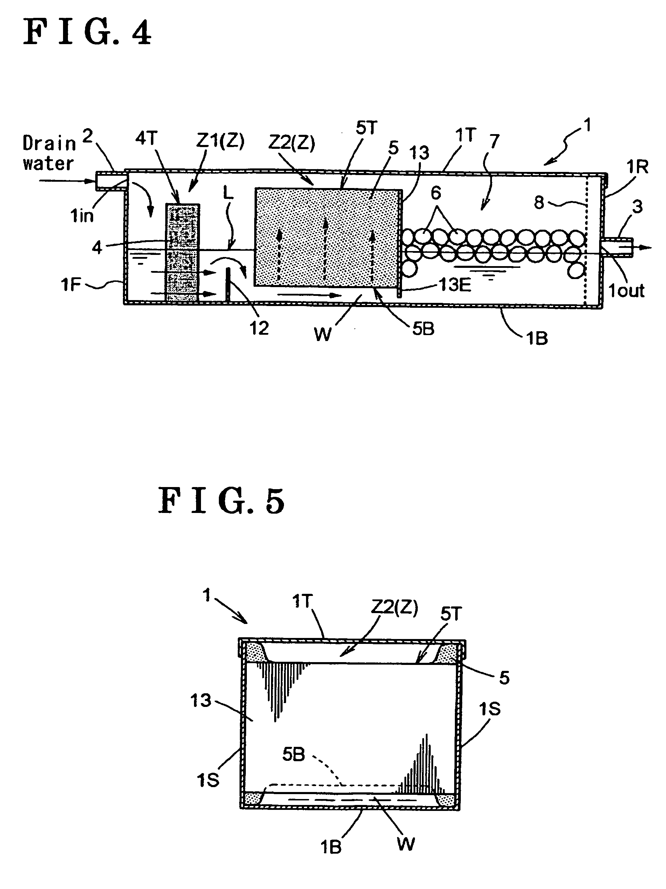

A second embodiment of the present invention is explained with reference to Figs. 4 and 5. According to the drain water treatment system shown in Fig. 4, in addition to the aforementioned structure of the first embodiment, a current plate 12 and an oil blocking plate 13 are provided. The structures and effects of both the current plate 12 and the oil blocking plate 13 are explained below.

The current plate 12 is formed between the pair of sidewalls 1 S perpendicular to the bottom face 1B of the system main body 1 on a downstream side of the oil-water separation filter 4 and, at the same time, an upstream side of the oil adsorption filter 5, i.e. between the oil-water separation filter 4 and the oil adsorption filter 5. Moreover, the current plate 12 is formed between the pair of sidewalls 1S such that each of its ends, i.e. each of its ends in contact with each of the sidewalls 1S, is sandwiched between dual flange portions between each of which a distance equivalent to a thickness of the current plate 12 is maintained.

An upper end of the current plate 12 is positioned below the normal water surface L of the drain water. Thus, part of the drain water, which obstructs the current plate 12 from flowing flows to the downstream side through a water passage formed above the upper end of the current plate 12. Oil droplets generated during operation of the oil-water separation filter 4 move upwards within the drain water and, together with the drain water, move towards the downstream side. In this case, since the drain water flows to the downstream side through the water passage formed above the upper end of the current plate 12, the oil droplets within the drain water tends to float upwards towards the surface of the water. Therefore, even in the case of oil droplets generated in a lower position of the oil-water separation filter 4, i.e. in the depths of the drain water, when the oil droplets move to the downstream side of the current plate 12, the oil droplets float close to the surface of the drain water. Because the current plate 12 thus causes oil droplets to rise in the drain water and to be positioned close to the surface of drain water before moving to the downstream side, the bottom face 5B of the oil adsorption filter 5 provided on the downstream side of the current plate 12 easily becomes able to make contact with the oil droplets, and it is thus easy for the oil adsorption filter 5 to adsorb the oil. The effectiveness of the drain water treatment system in eliminating oil is accordingly enhanced.

The oil blocking plate 13 is installed and supported between the pair of sidewalls 1S of the system main body 1 so as to make close contact with an end face of the oil adsorption filter 5 on the downstream side. As shown in Fig. 5, the oil blocking plate 13 is made of a rectangular resin plate member, for example, of a size that substantially covers practically the entire end face of the oil adsorption filter 5 on the downstream side, and a dimension of the oil blocking plate 13 in a horizontal direction is substantially equal to that of the oil adsorption filter 5. By providing an oil blocking plate 13 of this kind, oil that has once been adsorbed onto the oil adsorption filter 5 is prevented from flowing to the downstream side.

An upper end of the oil blocking plate 13 is substantially the same height as that of the upper face 5T of the oil adsorption filter 5. The void Z1 formed between the upper face 5T of the oil adsorption filter 5 and the cover 1T is maintained in an open position on the downstream side. Therefore, the overflow void Z mentioned above is also maintained in an open position, extending from the drain water inlet 1 in to the drain water outlet 1out.

A lower end portion 13E of the oil blocking plate 13 projects slightly in a downward direction from the bottom face 5B of the oil adsorption filter 5. In this case, however, a gap is formed between the lower end portion 13E and the bottom face 1B of the system main body 1, and a flow of the water passage W towards the downstream side is thus secured. As described in detail above in the context of the first embodiment, oil droplets within the upper layer of the drain water that flows along the water passage W move to the downstream side while maintaining contact with the bottom face 5B of the oil adsorption filter 5. At this time, since the oil droplets are pressed against the bottom face 5B by virtue of a buoyancy force, it is easy for oil located on the surface of the drain water to be adsorbed by the oil adsorption filter 5.

When oil in the drain water is of a high concentration, the speed with which the oil adsorption filter 5 adsorbs oil is inadequate. As long as oil contained in the upper layer of the drain water is moving from the upstream end to the downstream end of the water passage W the oil may on occasions not be adequately adsorbed onto the bottom face 5B of the oil adsorption filter 5. Even in cases of this kind, since the lower end portion 13E of the oil blocking plate 13 projects in a downward direction from the bottom face 5B of the oil adsorption filter 5, oil droplets in the upper layer of the drain water are temporarily blocked, and thereafter oil can make contact with the oil adsorption filter 5 over a long period. Thus, even when the speed of adsorption of oil by the oil adsorption filter 5 is inadequate, the risk of oil droplets moving to the downstream side can be reduced.

The length of a portion of the oil blocking plate 13 projecting from the bottom face 5B of the oil adsorption filter 5 may be appropriately modified, as long as the flow in the water passage W on the downstream side is not blocked. In addition, a height, and a position in a longitudinal direction, of the current plate 12 may also be appropriately modified.

According to the aforementioned embodiments, the neutralizing agent portion 7 is not necessarily disposed into the system main body. For example, the oil may be eliminated in the system main body 1, and thereafter the drain water may be neutralized in a separate system connected to the system main body.

Further, because, according to the aforementioned embodiments, the water passage W is formed below the oil adsorption filter 5, the passage into which the drain water flows can be assured, disruption of the flow of drain water can be prevented, and impediments caused by drain water flowing backwards may be avoided.

Furthermore, because, according to the aforementioned embodiments, the current plate 12 is provided below the normal surface L of the drain water, the drain water flowing downstream after passing through the oil-water separation filter 4 is blocked by the current plate 12, and the drain water is made to flow in the upstream direction. Accordingly, after reaching the current plate 12 together with the drain water flowing to the downstream side, the oil droplets generated in lower positions of the oil-water separation filter 4 are raised by an upward flow of the drain water for a short period of time, and oil droplets contained in the drain water are made to flow upwards. In addition, because the current plate 12 is provided on the downstream side of the oil-water separation filter 4, as well as on the upstream side of the oil adsorption filter 5, after passing through the oil-water filter 4 the current plate 12 functions until the drain water reaches the oil adsorption filter 5. The flow of the drain water is thus restricted and oil droplets are accordingly agglutinated. Effectiveness of the oil adsorption filter 5 in adsorbing oil is accordingly enhanced.

Furthermore, according to the aforementioned embodiments, when the oil adsorption filter 5 adsorbs oil in the drain water, oil accumulates on the oil adsorption filter 5. Since the oil blocking plate 13 is provided on the downstream side of the oil adsorption filter 5, the oil that accumulates on the oil adsorption filter 5 is not likely to be discharged into the flow passage of the drain water. As a result, effectiveness in elimination of oil may be enhanced.

Furthermore, according to the aforementioned embodiments, oil within droplets flowing in the upper face of the water passage W provided below the oil adsorption filter 5 is temporary stopped at a projecting portion of the oil blocking plate 13. It is difficult for oil that has been stopped to flow to the downstream side. A time during which oil makes contact with the oil blocking plate 13 may be extended, and accordingly more oil may be adsorbed onto the oil adsorption filter 5. Effectiveness in eliminating oil is thereby enhanced.

## Claims

1. A drain water treatment system comprising a drain water inlet (1in) into which drain water including moisture as a solvent and oil as a solute flows, and a drain water outlet (lout) from which the drain water flows, **characterized in that** the drain water treatment system further comprises an oil-water separation filter (4) for separating moisture and oil in a state in which an upper end portion (4T) of the oil-water separation filter is positioned above a normal water surface (L) of the drain water, an oil adsorption filter (5) for adsorbing the oil, and an overflow void (Z) that is formed extending from the drain water inlet (1in) to the drain water outlet (lout).

2. A drain water treatment system according to claim 1, further comprising:
a water passage (W) formed below the oil adsorption filter (5).

3. A drain water treatment system according to either one of claims 1 and 2, further comprising:
a current plate (12) provided on a downstream side of the oil-water separation filter (4) and on an upstream side of the oil adsorption filter (5), the current plate being formed below the normal water surface (L) of the drain water.

4. A drain water treatment system according to either one of claims 2 and 3, further comprising:
a blocking plate (13) on a downstream side of the oil adsorption filter (5).

5. A drain water treatment system according to claim 4, wherein a lower end portion (13E) of the blocking plate (13) projects into the water passage (W).

6. A drain water treatment system according to claim 2, wherein the oil adsorption filter (5) has a water-shedding quality.

## Patentansprüche

1. Abgabewasserbehandlungsanlage mit einem Abgabewassereinlass (1in), in den Abgabewasser mit Nassstoff als Lösungsmittel und Öl als gelöstem Stoff strömt, und einem Abgabewasserauslass (1out), aus dem das Abgabewasser strömt,
**dadurch gekennzeichnet, dass**
die Abgabewasserbehandlungsanlage des weiteren einen Öl-Wasser-Trennfilter (4) zum Abscheiden von Nässe und Öl hat, der sich in einer solchen Lage befindet, dass ein oberer Endabschnitt (4T) des Öl-Wasser-Trennfilters über einer normalen Wasseroberfläche (L) des Abgabewassers positioniert ist, einen Öladsorptionsfilter (5) zum Adsorbieren des Öls und eine Überlauflücke (Z) hat, die so ausgebildet ist, dass sie sich von dem Abgabewassereinlass (1in) zu dem Abgabewasserauslass (1out) erstreckt.

2. Abgabewasserbehandlungsanlage gemäß Anspruch 1, des weiteren mit:
einem Wasserkanal (W), der unter dem Öladsorptionsfilter (5) ausgebildet ist.

3. Abgabewasserbehandlungsanlage gemäß einem der Ansprüche 1 oder 2, des weiteren mit:
einer Strömungsplatte (12), die an einer stromabwärtigen Seite des Öl-Wasser-Trennfilters (4) und an einer stromaufwärtigen Seite des Öladsorptionsfilters (5) vorgesehen ist, wobei die Strömungsplatte unterhalb der normalen Wasseroberfläche (L) des Abgabewassers ausgebildet ist.

4. Abgabewasserbehandlungsanlage gemäß einem der Ansprüche 2 oder 3, des weiteren mit:
einer Sperrplatte (13) an einer stromabwärtigen Seite des Öladsorptionsfilters (5).

5. Abgabewasserbehandlungsanlage gemäß Anspruch 4, wobei ein unterer Endabschnitt (13E) der Sperrplatte (13) in den Wasserkanal (W) hinein ragt.

6. Abgabewasserbehandlungsanlage gemäß Anspruch 2, wobei der Öladsorptionsfilter (5) eine wasserabweisende Beschaffenheit hat.

## Revendications

1. Système pour le traitement des eaux usées comprenant une entrée (1in) des eaux usées dans laquelle s'écoulent les eaux usées comprenant de l'humidité en tant que solvant et de l'huile en tant que soluté, et une sortie (lout) des eaux usées à partir de laquelle s'écoulent les eaux usées, **caractérisé en ce que** le système pour le traitement des eaux usées comprend en outre un filtre (4) de séparation huile-eau destiné à séparer l'humidité et l'huile selon un état dans lequel une partie d'extrémité supérieure (4T) du filtre de séparation huile-eau est placée au-dessus d'une surface normale (L) de l'eau des eaux usées, un filtre (5) d'adsorption d'huile destiné à adsorber l'huile, et un vide (Z) de trop-plein qui est constitué de manière à s'étendre de l'entrée (1in) des eaux usées à la sortie (lout) des eaux usées.

2. Système pour le traitement des eaux usées selon la revendication 1, comprenant en outre :
un passage (W) d'eau formé au-dessous du filtre (5) d'adsorption d'huile.

3. Système pour le traitement des eaux usées selon l'une quelconque des revendications 1 et 2, comprenant en outre :
une plaque (12) de courant placée sur un côté aval du filtre (4) de séparation huile-eau et sur un côté amont du filtre (5) d'adsorption d'huile, la plaque de courant étant formée au-dessous de la surface normale (L) de l'eau des eaux usées.

4. Système pour le traitement des eaux usées selon l'une quelconque des revendications 2 et 3, comprenant en outre :
une plaque (13) de blocage sur un côté aval du filtre (5) d'adsorption d'huile.

5. Système pour le traitement des eaux usées selon la revendication 4, dans lequel une partie d'extrémité inférieure (13E) de la plaque (13) de blocage fait saillie dans le passage (W) d'eau.

6. Système pour le traitement des eaux usées selon la revendication 2, dans lequel le filtre (5) d'adsorption d'huile possède une qualité de déversement de l'eau.
